(19) Europäisches Patentamt
European Patent Office
Office européen des brevets

(11) **EP 1 092 208 B1**

(12) **EUROPÄISCHE PATENTSCHRIFT**

(45) Veröffentlichungstag und Bekanntmachung des Hinweises auf die Patenterteilung:
**15.05.2002 Patentblatt 2002/20**

(21) Anmeldenummer: **99931193.9**

(22) Anmeldetag: **26.06.1999**

(51) Int Cl.7: **G06T 7/00**

(86) Internationale Anmeldenummer:
**PCT/EP99/04442**

(87) Internationale Veröffentlichungsnummer:
**WO 00/00931 (06.01.2000 Gazette 2000/01)**

(54) **BERECHNUNG UND DARSTELLUNG 2- ODER 3-DIMENSIONALER RAUMDIFFERENZEN VON STRUKTUREN**

METHOD FOR COMPUTING AND DISPLAYING 2D- OR 3D-SPATIAL DIFFERENCES OF STRUCTURES

CALCUL ET REPRESENTATION DE LA DIFFERENCE SPATIALE DE STRUCTURES EN 2D OU 3D

(84) Benannte Vertragsstaaten:
**AT CH DE FR GB LI SE**

(30) Priorität: **30.06.1998 DE 19829170**

(43) Veröffentlichungstag der Anmeldung:
**18.04.2001 Patentblatt 2001/16**

(73) Patentinhaber: **Schormann, Thorsten**
**40724 Hilden (DE)**

(72) Erfinder: **Schormann, Thorsten**
**40724 Hilden (DE)**

(74) Vertreter: **Christophersen, Ruth**
**Kapellstrasse 12**
**40479 Düsseldorf (DE)**

(56) Entgegenhaltungen:
**WO-A-98/01818        US-A- 5 568 384**

• **SCHORMAN T ET AL: "STATISTICS OF DEFORMATIONS IN HISTOLOGY AND APPLICATION TO IMPROVED ALIGNMENT WITH MRI" IEEE TRANSACTIONS ON MEDICAL IMAGING, US, IEEE INC. NEW YORK, Bd. 14, Nr. 1, Seite 25-35 XP000507920 ISSN: 0278-0062**
• **KOCVARA M: "An adaptive multigrid technique for three-dimensional elasticity" INTERNATIONAL JOURNAL FOR NUMERICAL METHODS IN ENGINEERING, 30 MAY 1993, UK, Bd. 36, Nr. 10, Seiten 1703-1716, XP000856182 ISSN: 0029-5981**

**Beschreibung**

Das Verfahren dient zur Berechnung und Darstellung von 2- oder 3-dimensionalen Raumunterschieden (Deformationsfelder) zur räumlichen Normierung von biologischen Objekten zur Anwendung für die medizinische Diagnostik, Forschung oder Medizintechnik. Die Gesamtheit der Raumunterschiede zweier Objekte in einem gemeinsamen Koordinatensystem wird im Folgenden als Deformationsfeld bezeichnet. Hierbei werden nicht die Objekte sondern die relativen Positionen der aus der Digitalisierung bildgebender Verfahren resultierenden Volumenelemente mindestens eines Objekts zu mindestens einer Referenzstruktur und i.A. zu sämtlichen Volumenelementen dieser Referenz berechnet und dargestellt. Zur Berechnung der 2- oder 3-dimensionalen Deformationsfelder verwendet das Verfahren ein computer-gestütztes System zur Aufnahme der analog zu digital gewandelten Signale (Volumenelemente) bildgebender Verfahren. Nach der Erfassung werden entsprechende Volumenelemente im Ausgangs- und Referenzvolumen mit Hilfe eines Bewegungsmodells analysiert und zugeordnet. Die Zuordnung erfolgt dabei durch grauwertbasierende Kräfte zwischen dem Ausgangsund Referenzvolumen, womit der zurückgelegte Weg jedes Volumenelementes des Ausgangsvolumens mit Hilfe von numerischen Mehrgitter-Verfahren berechnet werden kann. Der von jedem Volumenelement zurückgelegte Weg wird in einem Meßwertspeicher erfaßt. Daran anschließend wird die punktweise Verschiebung des Ausgangsvolumens mit Hilfe des Deformationsfeldes durchgeführt und das Ergebnis von einem Speicher erfaßt oder einer Visualisierungseinheit zugeführt. Das Deformationsfeld kann auch durch Anwendung an einem 2- oder 3-dimensionalen regelmäßigen Gitter auf einer Visualisierungseinheit sichtbar gemacht werden und dient zur statistischen Analyse der Variabilität von räumlichen Strukturen (interindividuelle Anpassung) oder der überlagerung mehrerer Objekte, die mindestens durch zwei verschiedene bildgebende Verfahren dargestellt sind (intra- und interindividuelle Anpassung). Insbesondere das Problem der automatischen, geometrischen Zuordnung von Volumina zweier bildgebender Verfahren zur Informationsverdichtung funktioneller und morphologischer Parameter wird mit dem Verfahren gelöst.

Beschreibung und Stand der Technik

Die Erfindung dient zur Berechnung und Darstellung von 2- oder 3-dimensionalen Raumunterschieden (Deformationsfelder) für die medizinische Diagnostik, Forschung oder Medizintechnik. Hierbei werden nicht die Objekte sondern die relativen Positionen der aus der Digitalisierung bildgebender Verfahren resultierenden Volumenelemente mindestens eines Objekts zu mindestens einer Referenzstruktur und i.A. zu sämtlichen Volumenelementen dieser Referenz berechnet und dargestellt. Es ist bereits bekannt, bildgebende Verfahren in der radiologischen Diagnostik einzusetzen, um normale und pathologisch veränderte Strukturen und Funktionen des Körpers bildmäßig zu erfassen und zu analysieren. Die verschiedenartigen Verfahren basieren auf einem gemeinsamen Grundprinzip: verschiedene "Informationsträger" wie z.B. sichtbares Licht, Röntgenstrahlen, Ultraschall, Radionuklide. Magnetfelder treten in Wechselwirkung mit dem Körper. Die dabei aufgenommene Information wird helligkeitskodiert in einem Bild oder - in drei Dimensionen - als Volumen dargestellt. Als bildgebende Systeme können unterschiedliche Vorrichtungen verwendet werden. Neben Vorrichtungen zur Erfassung histologischer Bildsequenzen mit lichtmikroskopischer Information ist es auch möglich, makroskopische Information aus Röntgen-Computertomographie- (CT), Kernspintomographie- (MRT), funktionelle MRT- (fMRT), Positron-Emissionstomographie-(PET) oder Single-Photon-Emission-Computer-Tomographie- (SPECT) Bildsequenzen zu verwenden.

Unter Verwendung dieser bildgebenden Verfahren betrifft die Erfindung insbesondere die vollautomatische Berechnung von Raumdifferenzen biologischer Objekte zur räumlichen Normierung. Die Berechnung der Raumdifferenzen erfolgt hierbei für {it jedes} Volumenelement. mit einer Kombination aus einem Bewegungsmodell, Mehrgitter-Verfahren, externer Kräfte und einem Mechanismus zur Vergröberung der Volumina. Die Gesamtheit der Raumdifferenzen (Deformationsfeld) wird von einem Speichererfaßt, der mit einer Visualisierungseinheit verbunden ist. Die Deformationsfelder können auch für die Integration der Bildinformation verschiedener, bildgebender Verfahren verwendet werden, d.h. für die überlagerung der mit verschiedenen Verfahren gewonnenen Bildinformationen in ein gemeinsames Koordinatensystem. Durch das hier vorgestellte Verfahren wird es möglich, die Objekte mit höchstmöglicher geometrischer Genauigkeit miteinander zur Deckung zu bringen, ohne daß eine Zuordnung von entsprechenden Volumenelementen mit einer meßtechnischen Vorrichtung erforderlich wird. Dieses Verfahren ermittelt automatisch die Distanz für jedes Volumenelement des Ausgangsobjekts zum Referenzobjekt, was mit bestehenden Meß - oder Zuordnungsmethoden aufgrund der großen Anzahl der Volumenelemente (mindestens ca. 8 Millionen in der Medizintechnik) nicht möglich ist. Insbesondere ist es mit klassischen Verfahren zum Ausmessen dreidimensionaler Objekte nicht möglich, interne Volumenelemente des Ausgangsobjekts in dem Referenzobjekt wiederzuerkennen, weil sie i.A. entweder nicht zugänglich oder auch nicht besonders ausgebildet sind, so daß eine Zuordnung nicht möglich ist. Es ist bereits bekannt, Anpassungsmethoden bereitzustellen, die interaktiv mit wenigen Stützstellen und eingeschränkter Zuordnungsmöglichkeit (Roland et al., 1994;Schiers et al., 1986; Bookstein, 1989; Rohr et al., 1996, vgl. auch Literaturverzeichnis am Ende der Schrift) oder auch automatisch (Friston et al., 1995; Lindeberg, 1995; Collins et al., 1995) aber nur Referenzpunkt-, Oberflächen- oder Kontur-basierend (Davatzikos, 1996; Thompson et al, 1996) oder global (Bajcsy et al., 1989; Miller et al., 1993; Bro-Nielsen et al., 1996; Thirion, 1996) arbeiten. Diese bekannten Verfahren haben die folgenden unvermeidbaren Einschränkungen, die eine für die Medizintechnik relevante vollautomatische und volumenelementgenaue Anpassung unmöglich machen:

1.) Manuell unterstützte Verfahren sind nicht reproduzierbar, so daß eine Wiederholung der Messung zu unterschiedlichen Ergebnissen führen würde. Diese Verfahren lassen sich sinnvoll nur bei eingeschränkter Zuordnung (z. B. globale Drehung) verwenden, weil andernfalls die Handhabung einer großen Anzahl von Referenzpunkten für eine genauere Zuordnung praktisch nicht durchführbar ist.

2.) Die Verwendung von nur Kontur- oder Oberflächen führt - neben der ebenfalls nötigen manuellen Unterstützung - zu Interpolationsproblemen entsprechender Oberflächen oder Konturen zwischen Ausgangs- und Referenzobjekt. Zudem ist die Zuordnung i.A. nicht reproduzierbar.

3.) Es wird die Voraussetzung von nur kleinen Deformationen gemacht, womit eine vollständige Zuordnung nicht möglich wird.

4.) Unter der Voraussetzung von großen und komplexen Raumunterschieden ist der numerische Rechenaufwand so groß, daß die bisher bekannten Verfahren entweder auf eine vollständige Zuordnung verzichten müssen oder es werden zur Minimierunng des Rechenaufwandes Filter verwendet. Allerdings ist es mit Hilfe dieser Filter nicht in ausreichender Weise möglich, eine volumenelementgenaue Anpassung zu erreichen, weil diese filterbasierenden Verfahren entweder heuristisch arbeiten. womit die Bestimmung exakter Deformationsfelder nicht mehr möglich wird oder die Umsetzung ist für eine i.A. dreidimensionale Anwendung in der Praxis wegen des großen Rechenaufwandes immer noch nicht durchführbar. Hierfür ist entscheidend, daß die Anzahl der aufzuwendenden Arbeitsschritte O dieser filterbasierenden Verfahren im besten Fall mit O(N logN) anwächst (N ist die Gesamtanzahl der Volumenelemente).

Die vorliegende Erfindung vermeidet die o.a. Nachteile (1-4) vollständig. Bei dem in Schormann et al. (1996) beschriebenen Verfahren handelt es sich um einen weiteren Vorschlag zur Bestimmung von relativ zu der vorliegenden Erfindung mit einem Bewegungsmodell - nur kleinen geometrischen Raumunterschieden. Zudem berücksichtigt dieser Vorschlag keinen Mechanismus zur Vergröberung der Objekte zur weiteren Verbesserung der Verarbeitungsgeschwindigkeit, keine modifizierten, externen Kräfte zur Steigerung der Anpassungsqualität. Zusätzlich wird in dieser Arbeit und in Henn et al. (1997) ein nicht-lineares Modell beschrieben, das gegenüber dem linearen Modell Nachteile hinsichtlich der numerischen Konvergenz, numerischer Instabilität und Konsistenz aufweist (s.u.). In diesem Zusammenhang ist zu erwähnen, daß es keine "Standard-Mehrgitter-Verfahren" für sämtliche, in diesem Sachzusammenhang auftretenden Differentialgleichungen existieren. Sondern die Mehrgitter-Verfahren bestehen aus vielen einzelnen Komponenten, die auf die jeweilige Problemstellung zugeschnitten werden müssen. Der Unterschied für die Lösung eines linearen bzw. nicht-linearen Modells ist daher durch die unterschiedlichen Anforderungen der Modelle selbst vorgegeben und beinhaltet daher eine eigene, an das Modell angepaßte Struktur (Art und Anzahl der Post- und Prärelaxation, Restriktion, Interpolation, V-, W-, F-Cycle, Gittertiefe, vgl. Press WH, Flannery BP, Teukolsky SA, Vetterling WT: {it Numerical recipes in C}.Cambridge: Cambridge U. P. (1988). S. 871 ff), womit es erforderlich war, für das lineare System ein neues Mehrgitterverfahren zu entwickeln.

Darüber hinaus unterscheidet sich das Bewegungsmodell von dem in Christensen et al. ((1997), S. 868, Abschnitt 3) vorgeschlagenen Flüssigkeitsmodell in den folgenden Punkten:

a) In der Arbeit von Christensen et al. ((1997), (1996)) wird die Umsetzung zu einem Flüssigkeitsmodell durch zusätzliche Lösung einer gewöhnlichen Differentialgleichung (Gl. 10 in Christensen et al. ((1997)) erreicht. Wie aus den Gleichungen 10 und 12 dieser Arbeit ersichtlich ist, muß für jeden Zeitschritt die Ableitung für jede Raumrichtung (der Gradient des Deformationsfeldes $\nabla \vec{u} \nabla \vec{u}$) berechnet werden. Diese Berechnung wird durch das von uns vorgestellte Bewegungsmodell vollständig vermieden, was unter der Berücksichtigung der großen Datenmengen und insbesondere der Zielsetzung einer schnellen Berechnung der Raumunterschiede einen erheblichen Rechenzeitvorteil bietet.

b) Zudem unterscheidet sich das Bewegungsmodell grundsätzlich von den in Christensen et al. (1996), (1997); Schormann et al. (1996); Henn et al. (1997) und Haller et al. (1996) beschriebenen Ausführungen:

(i) in der linearisierten Ausführung des Modells:

$$L(\delta\vec{u}^{(n)}) = f(\vec{u}^{(n)}_{ges})$$

$$\vec{u}^{(n+1)}_{ges} = \delta\vec{u}^{(n)} + \vec{u}^{(n)}_{ges}$$

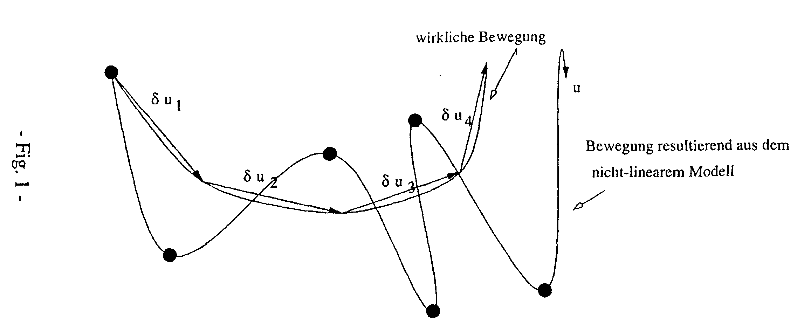

wobei L der Differentialoperator L= $\mu\Delta+(\mu+\lambda)\bigtriangledown\bigtriangledown\cdot$, $\mu$, $\lambda$ die Lam'e'schen Konstanten, $\vec{f}$ die grauwertbasierende, externe Kraft, $\delta\vec{u}^{(n)}$ die n-te lokale Verschiebung im Modell und die $\vec{u}^{(n)}_{ges}$ bereits berechnete, gesamte Bewegung eines beliebig herausgegriffenen Volumenelementes sind. Die oben beschriebene Linearisierung des Modells durch Einführung zeitunabhängiger, infinitesimaler Wegstrecken $\delta\vec{u}^{(n)}$ die in ihrer Gesamtheit die Bewegung der Volumenelemente beschreiben, stellt einen gravierenden Unterschied zu den in den o.a. Arbeiten genannten Verfahren da (vgl. auch Fig. 1). Bei dem in Christensen et al. bevorzugten zeitabhängigen Modell muß, im Vergleich hierzu, eine zusätzliche gewöhnliche Differentialgleichung gelöst werden. Das in Schormann et al. (1996) und Henn et al. (1997) beschriebene Verfahren beinhaltet ein {nicht-lineares} Modell, das sowohl im Differentialoperator als auch bei der externen Kraft f=f(u) Abhängigkeiten in den Raumunterschieden u aufweist:

$$L(\vec{u}) = \vec{f}$$

wobei eine Taylorreihen-Entwicklung von $\vec{f}(\vec{u})$ auf die Nichtlinearität bzgl. $\vec{u}$ führt.

Diese nicht-linearen Modelle weisen folgende Nachteile auf: Zum einen sind sie sehr anfällig gegenüber numerischen Instabilitäten, die praktisch unvermeidbar durch Rauschen der bildgebenden Systeme verursacht werden. Zum anderen stellt die sehr geringe numerische Konvergenz bei diesen nicht-linearen Systemen ein Problem dar und zudem ist die Konsistenz, d.h., die Korrelation homologer Strukturen im Ausgangs- und Zielvolumen problematisch.

Das Bewegungsmodell unterscheidet sich daher grundsätzlich von dem Stand der Technik hinsichtlich der Zeitunabhängigkeit und der Linearisierung.

Zudem ist es mit Hilfe der bekannten Verfahren nicht in ausreichender Genauigkeit möglich, bei beliebigen Objekten automatisch, d.h. ohne manuelle Unterstützung, Anpassungsergebnisse zu erzeugen, bei denen jedes Volumenelement des Ausgangsobjekts einem entsprechenden Volumenelement des Referenzobjekts zugewiesen wird.

Es ist daher Aufgabe der vorliegenden Erfindung, ein Verfahren der einleitend genannten Art zu verbessern, so daß der extrem hohe numerische Rechenaufwand bei gleichbleibend hoher Anpassungsgüte durch ein linearisiertes Bewegungsmodell und durch ein auf dieses Modell angepaßtes Mehrgitter-Verfahren erheblich reduziert wird, womit die Berechnung von Deformationsfeldern ohne interaktive Hilfe ermöglicht wird. Die Berechnungszeiten in drei Dimensionen für das Flüssigkeitsmodell werden in der Literatur (vgl. Christensen et al., IEEE Computer, 29(1): 32-38, 1996) mit ca. 7 Tagen angegeben, wohingegen das hier vorgestellte Verfahren - in einer parallelisierten Ausführung - ca. eine halbe Stunde benötigt.

Diese Aufgabe wird erfindungsgemäß durch ein Verfahren mit den Merkmalen des Anspruchs 1.) dadurch gelöst, daß zur Berechnung der Deformationsfelder die Objekte zunächst von bildgebenden Verfahren in einem computer-gestützten System erfaßt werden. Nach der Erfassung wird für jedes Volumenelement des Ausgangsvolumens die Bewegung auf ein entsprechendes Volumenelement des Referenzvolumens bestimmt. Hierfür werden die Objekte zunächst zum elastischen Stoff gewandelt, indem jedes Volumenelement über Federn mit seinen nächsten Nachbarn verbunden wird. Dieser Vorgang entspricht einer Diskretisierung des ursprünglich kontinuierlichen Problems. Durch Anbringen einer äußeren Kraft, die gerade erforderlich ist, um die Raumdifferenz zu einem Referenzvolumenelement zu überwinden, deformiert sich dieses aus Volumenelementen bestehende Gitter, wobei allerdings die entstehende Deformation nur ein Kompromiß zwischen der externen Kraft und den aus den Federn resultierenden, internen Kräften ist (Elastizitätsmodell). Zur Berechnung der vollständigen Raumdifferenz wird daher an der neuen Zwischenposition eine neu berechnete, externe Kraft aufgewendet bis schließlich der Endzustand, eine vollständige Deckung mit dem entsprechenden Referenzvolumenelement, erreicht ist.

Durch diese sukzessive, d.h. linearisierte Anwendung der Kräfte, kann die gesamte Bewegung eines beliebigen Volumenelementes bestimmt werden, womit große Deformationen berechnet bzw. korrigiert werden können. Die Gesamtbewegung der Volumenelemente wird einer bevorzugten Ausführungsform erfindungsgemäß durch sukzessive Anwendung neuer, externer Kräfte erreicht, die sich aus den geänderten Raumdifferenzen des vorhergehenden Ortsintervalls ergeben. Sie kann aber auch durch Lösung einer zeitabhängigen Bewegungsgleichung für jedes Volumenelement erreicht werden, was jedoch numerisch aufwendiger ist (Christensen et al., 1994). Eine weitere Aufgabe der vorliegenden Erfindung ist es, geeignete Kräfte zwischen der Form des Ausgangs- und Referenzvolumens zu bestimmen, mit denen der zurückgelegte Weg jedes Volumenelementes des Ausgangsvolumens auf das Referenzvolumen gesteuert werden kann. Diese Aufgabe wird erfindungsgemäß dadurch gelöst, daß die quadrierte Grauwertdifferenz zwischen dem Referenzvolumenelement und dem um eine kleine Raumdifferenz verschobenen Ausgangsvolumenelement als auch die quadrierte Grauwertdifferenz zwischen Ausgangsvolumenelement und dem um eine kleine Raumdifferenz verschobenen Referenzvolumenelement minimiert wird. Hiermit wird aus der Grauwertdifferenz gerade die Stärke, der Ort und die Richtung der Kraft bestimmt, die für jedes Volumenelement die sich einstellende Bewegungsbahn eindeutig beschreibt. Durch die Symmetrisierung zwischen Ausgangs- und Referenzvolumen wird die Kraft in einen Anteil aufgespalten, der das Ausgangsvolumen in das Referenzvolumen drückt und einen Anteil der das Ausgangsvolumen in das Referenzvolumen zieht. Eine andere denkbare Alternative ist eine Kraft, die nur aus dem 1. Anteil der symmetrischen Kraft besteht, wobei aber eine unerwünschte Verschlechterung des numerischen Aufwandes und der Anpassungsgenauigkeit erreicht wird. Alternativ zur symmetrisierten Kraft werden die Kräfte erfindungsgemäß unempfindlich gegenüber Rauschen bildgebender Systeme gemacht, indem die Stärke der Kräfte zunächst quadratisch mit den Grauwertdifferenzen anwachsen und für größere Differenzen linear zunehmen.

Eine weitere Aufgabe der vorliegenden Erfindung ist es, die Deformationsfelder mit möglichst geringem numerischen Aufwand ohne Verlust an Genauigkeit zu berechnen. Diese Aufgabe wird erfindungsgemäß mit Hilfe von finiten Differenzen oder finiten Elementen als Diskretisierer und auf das Modell angepaßten numerischen Mehrgitter-Verfahren, dem CS (Correction Scheme) oder dem FAS (Full Approximation Scheme) gelöst. Hiermit wird es ermöglicht, daß der numerische Aufwand nur linear mit der Anzahl der Volumenelemente anwächst (O(N)). Die bisher besten bekannten globalen Filter-Verfahren wachsen mit O(N logN) (Flüssigkeitsmodell Christensen et al., 1997: O(N$^2$)) an, womit bei der groß en Anzahl der Volumenelemente (klinische Anwendungen: ca. 8 Millionen) ein erheblicher Zeitnachteil erwächst, der diese Verfahren für die praktische Anwendung mit bisher bekannten Rechnerleistungen unbrauchbar macht. Bei der vorliegenden Erfindung wird das Ergebnis nicht approximiert, sondern kann mit einer gewählten numerischen Genauigkeit bestimmt werden. Als Ergebnis wird der von jedem Volumenelement zurückgelegte Weg in einem Meßwertspeicher erfaßt. Daran anschließend wird die punktweise Verschiebung von dem Ausgangsvolumen mit Hilfe des Deformationsfeldes durchgeführt und das Ergebnis von einem Speicher erfaßt oder einer Visualisierungseinheit zugeführt.

Eine weitere Aufgabe der Erfindung ist es, die automatische Zuordnung globaler, geometrischer Strukturen innerhalb der Objekte zu verbessern und eine weitere Steigerung der Verarbeitungsgeschwindigkeit zu erreichen. Diese Aufgabe wird erfindungsgemäß mit Hilfe von einem Mechanismus zur Vergröberung der Volumina erreicht. Bei diesem Verfahren werden mehrere benachbarte Volumenelemente zu einem neuen Volumenelement zusammengefaßt, z.B. starr verbunden. Dieses Verfahren wird mehrfach wiederholt, so daß eine Hierachie von gröber werdenden Volumina entsteht. Das Deformationsfeld wird zunächst für das größte Volumen bestimmt. Die Deformationsfelder werden auf das nächst feinere Volumen interpoliert bis schließlich die originale Auflösung erreicht ist. Durch die Anwendung auf zunächst grobe Volumina gelangt die lokale Zuordnung von Volumenelementen in den Bereich globaler Raumdifferenzen, so daß hiermit die Anpassung grober Strukturen und damit über größere Raumdistanzen erfolgen kann. Durch diese Reduktion der Gesamtanzahl der Volumenelemente wird eine Steigerung der Verarbeitungsgeschwindigkeit erreicht. Gleichzeitig wird die automatische Zuordnung geometrischer Strukturen insbesondere bei räumlich komplexen Strukturen der Objekte verbessert, da die Zuordnung von groben nach feinen Strukturen systematisch aufgebaut wird. Mit der vollautomatischen Berechnung von Deformationsfeldern steht eine Erfindung zur Verfügung, die es im Bereich der Medizintechnik möglich macht, eine präzise Lokalisation der Daten verschiedener bildgebender Verfahren vorzunehmen. Es stellt ein neues, bisher nicht verfügbares Werkzeug insbesondere zur Analyse der Cortexorganisation beim Menschen dar. Eine solche Analyse ist nicht möglich, wenn nicht vorher das Ausmaß der durch normale interindividuelle Variabilität bedingten Strukturvariation bekannt ist. Diese geometrische Normalität von Strukturen innerhalb der Objekte kann mit Deformationsfeldern berechnet werden. Hierfür werden entweder die Strukturen einer Population von Objekten mit Hilfe der Deformationsfelder in ein gemeinsames Koordinatensystem transformiert, wobei dieses Verfahren eine Analyse der überlagerungswahrscheinlichkeiten dieser Strukturen ermöglicht. Oder aus den Deformationsfelder einer Population von Objekten lassen sich Gauß -Felder berechnen. Hiermit ist es über einen Chi-Quadrat-Test bezüglich des Mahanalobis-Abstandes. der sich aus Ellipsoiden gleicher Wahrscheinlichkeitsdichten für jedes Volumenelement berechnet, möglich, Signifikanzniveaus zur Normalität von Objekten anzugeben. Die Durchführung dieser Analyse soll in den Aufbau einer speziellen Datenbank münden, in der alle Daten in einem sogenannten "menschlichen Referenzgehirn" zusammengefaßt sind.

Unter Berücksichtigung individueller anatomischer Unterschiede lassen sich unter Zuhilfenahme dieser Datenbank pathologische Veränderungen quantitativ und qualitativ erfassen und adäquat behandeln. In der klinischen Diagnostik können damit die Grenzen der Normalität aktueller Patientendaten bzgl. eines Referenzobjektes validiert werden, was z.B. von groß er Bedeutung für stereotaktische Operationen ist.


Beschreibung der Zeichnungen

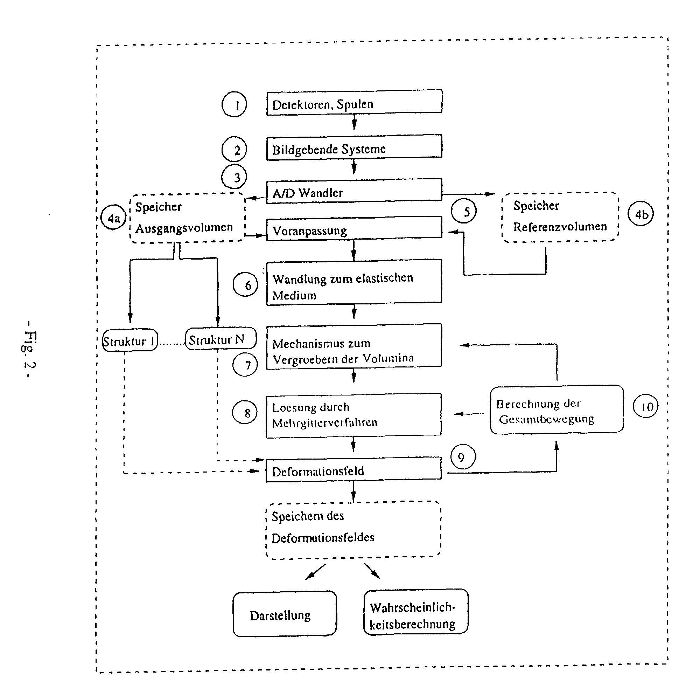

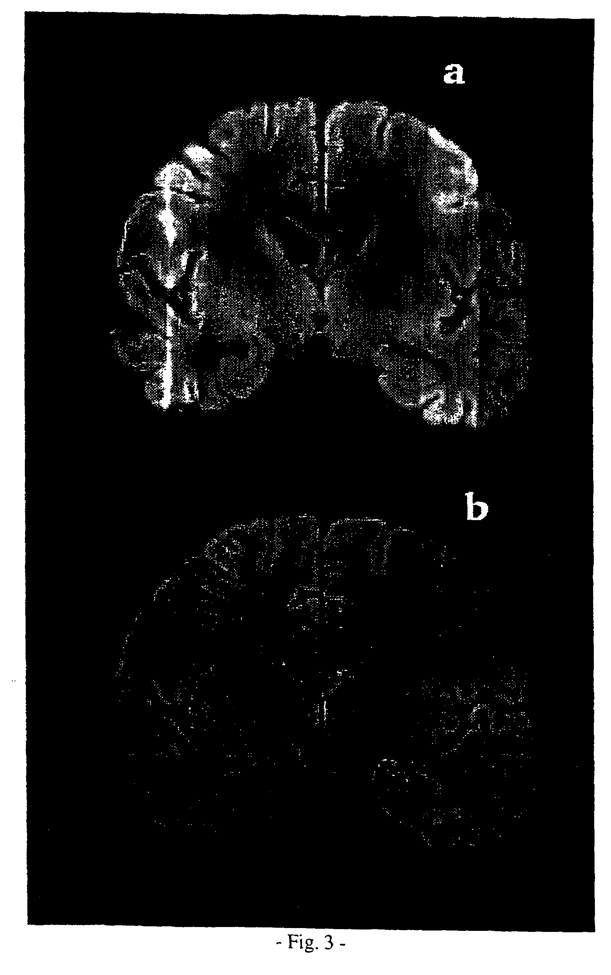

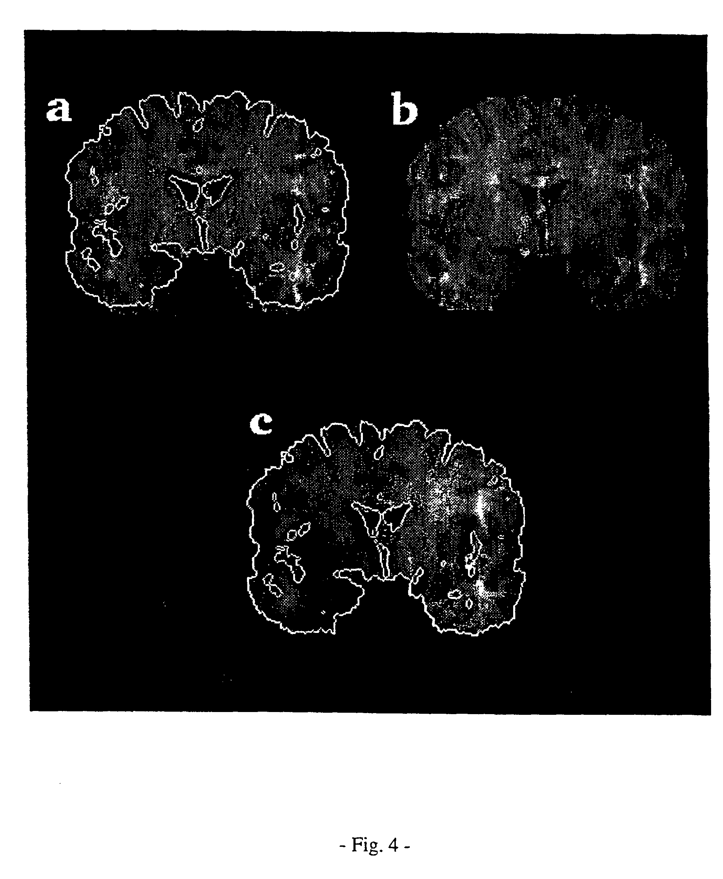

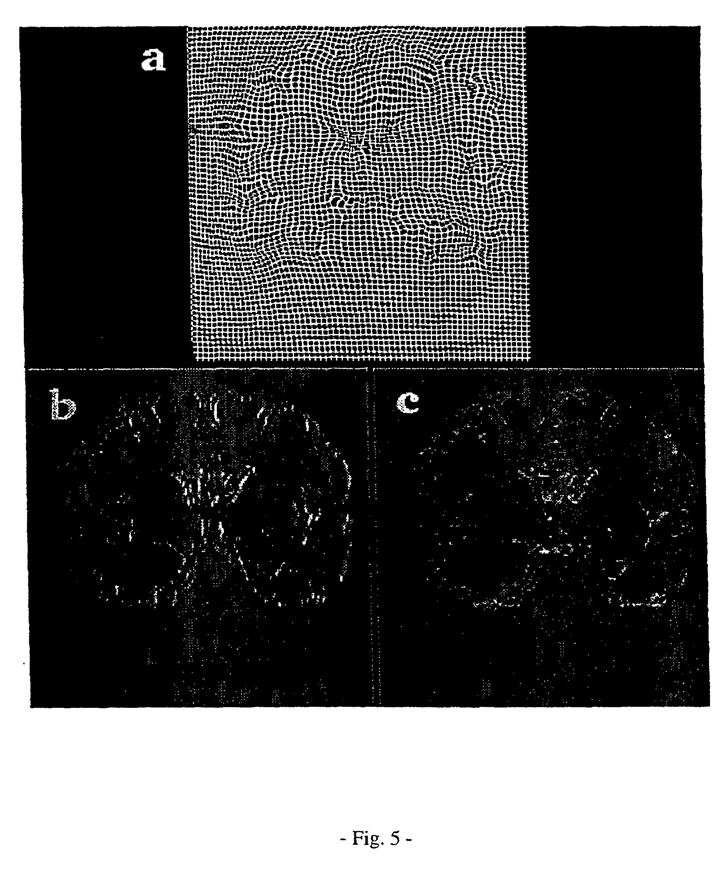

Die folgenden Zeichnungen dienen dem besseren Verständnis der Erfindung, wobei weitere Einzelheiten den nachfolgenden, ausführlichen Beschreibungen zu entnehmen sind. In den Zeichnungen zeigt Fig. 1 die Bewegung der "wahren" Bahn eines Volumenelementes, der Approximationen durch das lineare Bewegungsmodell $\delta \vec{u}_i$ und einem nicht-linearen Modell (geschwungene Kurve). Fig. 2 ist eine schematische Zeichnung einer Ausführungsform der vorliegenden Erfindung. Fig. 3 zeigt eine zweidimensionale Anwendung des Deformationsfeldes zur Verknüpfung von MR- (a) und einem entsprechenden histologischen Serienschnitt (b) zur Integration multimodaler Bildinformation. Erkennbar ist, daß trotz unterschiedlicher Schnittrichtungen bei der Datenaufnahme und unvermeidbarer Herstellungsartefakte bei der histologischen Aufbereitung eine volumenelementgenaue Zuordnung erreicht ist. Fig. 4 zeigt eine zweidimensionale Anwendung des Deformationsfeldes zur Verknüpfung von zwei verschiedenen Gehirnen (a,b), die mit Hilfe der MR-Tomographie aufgenommen wurden. Um die räumlichen Unterschiede in beiden Gehirnen vor (a) und nach (c) der Anpassung sichtbar zu machen, wurde die äußere Kontur des Referenzschnittes (b) in (a) und (c) überlagert. Fig. 5 zeigt das Deformationsfeld (a), das gerade die in Fig. 4 gezeigte Ausgangsstruktur auf die Referenzstruktur deformiert. Um geometrische Veränderungen auch innerer Strukturen sichtbar machen zu können, wird das Deformationsfeld auf ein regelmäßiges Gitter angewendet, wobei Bereiche des Gehirns hervortreten, in denen es expandiert bzw. komprimiert wird. Darunter sind die Kräfte für die x- (b) und y-Richtung (c) gezeigt, wobei die Stärke und Richtung in Grauwerte so kodiert ist, daß in (b) die Kraft, die nach links zeigt in weiß (schwarz nach rechts) und in (c) die Kraft, die nach oben zeigt in weiß (schwarz nach unten) dargestellt ist. Der konstante Grauwert am Rand des Bildes markiert eine Kraft der Stärke 0. Die resultierende Kraft in jedem Bildpunkt setzt sich aus der vektoriellen Summe dieser Kräfte zusammen.

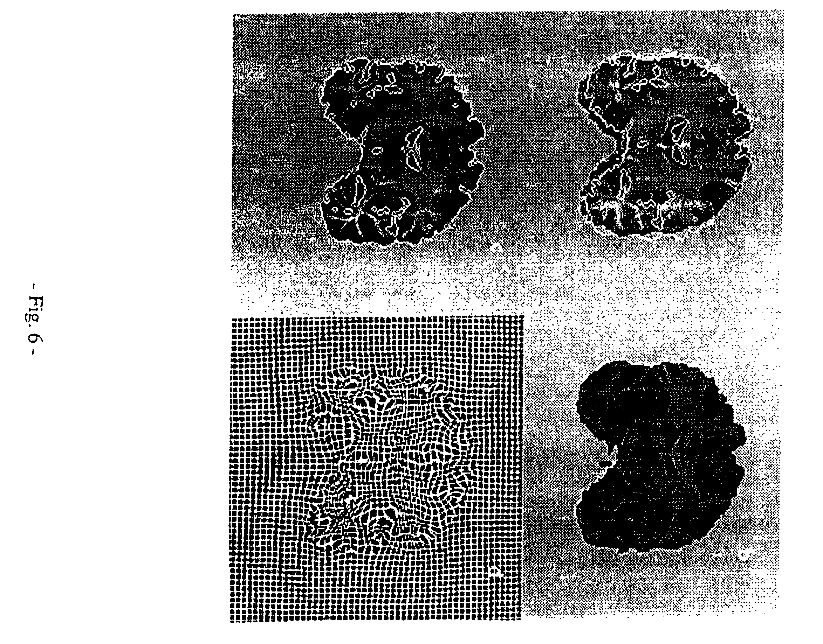

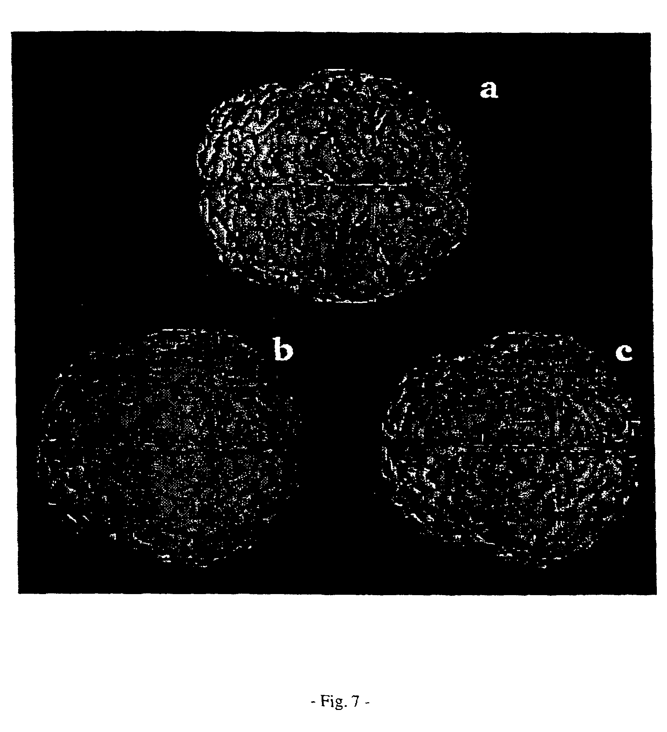

Fig. 6 zeigt ein weiteres Anwendungsbeipiel (Ausgangsobjekt vor (a) und nach (c) der Anpassung, (b) Referenzobjekt), bei dem besonders starke Deformationen im rechten Bereich des Objekts auftreten (vgl. Deformationsfeld (d)). Fig. 7 zeigt eine dreidimensionale Anwendung des Verfahrens an zwei individuellen Gehirnen. In der Ausgangssituation ist die sehr unterschiedliche Form der Oberfläche (Sulcusmuster) erkennbar. Nach der Deformation sind die Volumina beider Gehirne, insbesondere das Sulcusmuster identisch. Die Erfassung der geometrischen Ausdehnung eines dreidimensionalen Objekts kann nach Fig. 2 mit Hilfe von bildgebenden Verfahren der Medizin (2) erfolgen, die mit mindestens einem Detektor ((1), z.B. Spule, CCD) ausgestattet sind. Die dabei erfaßten Signale werden einem A/D Wandler (3) zugeführt und die digital gewandelten Signale des Volumens 1 und des Volumens 2 in einem Speicher (4a),(4b) gehalten. Bei der Erfassung der Objekte mit bildgebenden Verfahren sind die Volumina mit Hilfe von stereotaktischen Methoden so zu positionieren, daß eine globale entsprechende Ausrichtung der Volumina gewährleistet ist. Bei fehlenden stereotaktischen Möglichkeiten wird die Position und Ausrichtung global durch Ausführung einer affinen Bewegung des Ausgangsobjekts korrigiert (5). Hierbei gewährleistet eine affine Bewegung i.A. eine höhere Anpassungsgüte als die Möglichkeit der stereotaktischen Fixierung, weil neben der Position auch noch zusätzlich die Größe korrigiert wird. Als nächster Schritt erfolgt eine Wandlung der Objekte als elastisches Material (6), indem jedes Volumenelement über Federn mit seinen nächsten Nachbarn verbunden wird. Hierdurch wird das Volumen in ein aus Volumenelementen bestehendes Gitter gewandelt. Jedes Volumenelement besteht aus einem bestimmten Grauwert. Die Kräfte, die zur überwindung der Raumdifferenzen erforderlich sind, ergeben sich - nach Anwendung von Extremalprinzipien der theoretischen Physik (Prinzip von Hamilton) - aus den Grauwertdifferenzen beider Volumina für jedes Volumenelement, was den Vorteil hat, daß keine entsprechenden Paßpunkte in beiden Volumina bestimmt werden müssen. Sondern vielmehr werden Volumenelemente des Ausgangsvolumens so verschoben, daß sich die Grauwertdifferenz zwischen beiden Volumina vermindert. Bei der elastischen Wandlung (6) erfolgt dieser Vorgang einmal, wobei die resultierende Verschiebung der einzelnen Volumenelemente ein Kompromiß ist zwischen der internen Kraft, die sich aus dem Federsystem berechnet und der externen Kraft, die sich aus der Grauwertdifferenz ergibt. In einem nächsten Schritt werden mehrere Volumenlemente zu einem neuen Volumenelement zusammengefaßt (7), indem die Federverbindung zwischen ihnen durch eine starre Verbindung ersetzt wird und der neue Grauwert sich z.B. aus dem Mittelwert der zusammenzufassenden Volumenelemente ergibt. Dieses Verfahren wird mehrfach wiederholt, so daß eine Hierarchie aus gröber werdenden Volumina entsteht. Das Deformationsfeld (9) wird zunächst auf dem gröbsten Volumen mit Hilfe von Mehrgitter-Verfahren (8) bestimmt.

Eine weitere Verbesserung der Anpassungsgüte erfolgt durch die Berechnung der Gesamtbewegung (10) durch sukzessive Anwendung des Deformationsfeldes (9) und Lösung mit dem Mehrgitter-Verfahren (8). Hierdurch entsteht eine Sequenz von Volumina, die dem Referenzvolumen immer mehr ähnelt, bis sie in dieser Auflösungsstufe identisch sind. Das resultierende Deformationsfeld wird auf das nächst feinere Volumen interpoliert, der Prozeß (8)-(9)-(10) auf jeder Auflösungsstufe wiederholt, bis schließlich die originale Auflösung erreicht ist. Durch die Anwendung auf zunächst grobe Volumina gelangt die lokale Zuordnung von Volumenelementen in den Bereich globaler Raumdifferenzen, so daß hiermit die Anpassung grober Strukturen und damit über größere Raumdistanzen erfolgen kann, womit auch gleichzeitig die automatische Zuordnung räumlich komplexer Strukturen verbessert wird, da die Zuordnung von groben nach feinen Strukturen systematisch aufgebaut wird, bis schließlich der Endzustand, eine vollständige übereinstimmung mit dem entsprechenden Referenzvolumen erreicht ist. Als bildgebende Systeme (2) können unterschiedliche Vorrichtungen verwendet werden. Neben Vorrichtungen zur Erfassung histologischer Bildsequenzen mit lichtmikroskopischer Information ist es auch möglich, makroskopische Information aus Röntgen-Computertomographie- (CT), Kernspintomographie- (MRT), funktionelle MRT-(fMRT), Positron-Emissions-Tomographie- (PET) oder Single-Photon-Emission-Computer-Tomographie- (SPECT) Bildsequenzen zu verwenden. Hierbei kommt der Integration multimodaler Bildinformation aus histologischen und MR-Bildsequenzen des identischen Objekts eine besondere Bedeutung zu, weil hiermit die nur makroskopische Information der MR-Tomographie durch die lichtmikroskopische Information ergänzt werden kann, sofern das histologische Volumen mit dem entsprechenden MR-Volumen durch die vorliegende Erfindung vollständig zur Deckung gebracht ist (Fig 3). Hiermit wird die makroskopische Auflösung der MR-Tomographie um einen Faktor 1000 verbessert, womit die Abgrenzung mikroskopisch definierter, anatomischer Areale ermöglicht wird. Die Erfindung ist dahingehend konzipiert (Fig. 2), daß es nicht erforderlich wird, für jede Struktur ein Deformationsfeld neu zu berechnen, sondern jede separate Struktur 1...N des Ausgangsobjektes kann mit Hilfe des einmal berechneten Deformationsfeldes auf die Referenz deformiert werden.

Aus der Darstellung Fig. 4 ist ersichtlich, daß die sehr unterschiedliche Morphologie verschiedener Gehirne durch die Erfindung vollautomatisch korrigiert werden kann. Die dazu erforderlichen Kräfte sind in Fig. 5 dargestellt, womit verdeutlicht werden soll, daß für jedes Volumenelement eine Kraft einer bestimmten Stärke und Richtung berechnet wird. Außerdem ist auch ersichtlich, daß die Kraft erfindungsgemäß aus zwei Anteilen besteht: einem Anteil, der das Ausgangsvolumen in das Referenzvolumen drückt und einem Anteil der das Ausgangsvolumen in das Referenzvolumen zieht. Dies ist erkennbar an der ausgebildeten überlagerung der beiden Objekte für die x- und y-Richtung. Fig. 5 zeigt das visualisierte Deformationsfeld, das auf ein regelmäßiges Gitter angewendet wurde, wobei veranschaulicht wird, daß große und komplexe Deformationen auch im Innern des Objekts vorhanden sind (Fig. 6), was an den teilweise stark expandierten oder komprimierten ursprünglich quadratischen Kästchen deutlich wird. Fig. 7 zeigt eine dreidimensionale Realisierung der Erfindung.

**Patentansprüche**

1. Verfahren zur Quantifizierung und Darstellung von 2- oder 3-dimensionalen Raumunterschieden für die medizinische Diagnostik, Forschung oder Medizintechnik, worin mit Hilfe von bildgebenden Verfahren Volumenelemente mindestens eines Objekts digitalisiert werden und die relativen Positionen dieser Volumenelemente zu mindestens einer Referenzstruktur und ggf. zu sämtlichen Volumenelementen dieser Referenz von einem Computergestützten System berechnet, gespeichert und dargestellt werden

    **dadurch gekennzeichnet, daß**

die zurückgelegten Wege der Volumenelemente des Ausgangsvolumens des Objekts auf die entsprechenden Volumenelemente des Referenzvolumens durch ein linearisiertes Bewegungsmodell

$$L(\delta\vec{u}^{(n)}=f(\vec{u}^{(n)}_{ges})$$

$$\vec{u}^{(n+1)}_{ges}=\delta\vec{u}^{(n)}+\vec{u}^{(n)}_{ges}$$

wobei L der Differentialoperator $L= \mu\Delta+(\mu+\lambda)\bigtriangledown\bigtriangledown\cdot, \mu, \lambda$ die Lam'e'schen Konstanten, $\vec{f}$ die grauwertbasierende, externe Kraft, $\delta\vec{u}^{(n)}$ die n-te lokale Verschiebung im Modell und die $\vec{u}^{(n)}_{ges}$ bereits berechnete, gesamte Bewegung eines beliebig herausgegriffenen Volumenelementes sind,
und ein auf dieses Bewegungsmodell angepaßtes numerisches Mehrgitter-Verfahren, und ggf. mit mehreren Auflösungsstufen der digitalisierten Volumina berechnet werden.

2. Verfahren nach Anspruch 1, **dadurch gekennzeichnet, daß** der von jedem Volumenelement zurückgelegte Weg (Deformationsfeld) in einem Meßwertspeicher erfaßt wird.

3. Verfahren nach den Ansprüchen 1 und 2, **dadurch gekennzeichnet, daß** die Verschiebung der Volumenelemente von dem gesamten oder Teilen des Ausgangsvolumens mit Hilfe des Deformationsfeldes durchgeführt wird.

4. Verfahren nach einem der Ansprüche 1 bis 2 **dadurch gekennzeichnet, daß** eine Visualisierung des Deformationsfeldes mit Hilfe von einem regelmäßigen Gitter einer Visualisierungseinheit (Druckermedium, Bildschirm) zugeführt wird.

5. Verfahren nach einem der Ansprüche 1 bis 3, **dadurch gekennzeichnet, daß** die Verschiebung der Volumenelemente von dem gesamten oder Teilen des Ausgangsvolumens einer Visualisierungseinheit (Druckermedium, Bildschirm) zugeführt wird.

6. Verfahren nach einem der Ansprüche 1 bis 5, **dadurch gekennzeichnet, daß** die Wahrscheinlichkeit des Auftretens von Strukturen einer Population von Objekten durch Anwendung der Deformationsfelder auf die Strukturen selbst oder die Wahrscheinlichkeiten durch Verwendung der Deformationsfelder berechnet werden.

7. Verfahren nach einem der Ansprüche 1 bis 6, **dadurch gekennzeichnet, daß** ein Elastizitätsmodell verwendet wird, bei dem das resultierende Deformationsfeld einmal und nicht sukzessiv berechnet wird.

8. Verfahren nach einem der Ansprüche 1 bis 7, **dadurch gekennzeichnet, daß** die Kräfte sich aus einer symmetrisierten Grauwertdifferenz zwischen Ausgangs- und Referenzvolumen ergeben.

**9.** Verfahren nach einem der Ansprüche 1 bis 7, **dadurch gekennzeichnet, daß** die Stärke der Kräfte zunächst quadratisch mit der Grauwertdifferenz anwächst und für größere Differenzen linear zunimmt.

**10.** Verfahren nach einem der Ansprüche 1 bis 9, **dadurch gekennzeichnet, daß** das Mehrgitter-Verfahren als Correction Scheme (CS) oder als Full Approximation Scheme ausgelegt ist, um das linearisierte Bewegungsmodell zu lösen.

**11.** Verfahren nach einem der Ansprüche 1 bis 10, **dadurch gekennzeichnet, daß** die überführung (Diskretisierung) in ein Elastizitäts- oder Bewegungsmodells mit Hilfe finiter Differenzen oder finiter Elemente vorgenommen wird.

**12.** Verfahren nach einem der Ansprüche 1 bis 11, **dadurch gekennzeichnet, daß** die Lösung mit den Mehrgitter-Verfahren und/oder das Verfahren zum Vergröbern der Volumina auf Parallelrechnern bei gleichzeitiger Verwendung von mehreren Prozessoren durchgeführt wird.

**13.** Verfahren nach einem der Ansprüche 1 bis 12, **dadurch gekennzeichnet, daß** die Berechnung der Deformationsfelder für verschiedene bildgebende Modalitäten eines oder verschiedener Objekte erfolgt.

**14.** Verfahren nach einem der Ansprüche 1 bis 13, **dadurch gekennzeichnet, daß** mindestens ein Objekt mit Hilfe der Computer-Tomographie und/oder der Magnet-Resonanz-Tomographie (MRT) und/oder der funktionellen MRT und/oder von histologischen Serienschnitten und/oder der Positronen-Emissions-Tomographie (PET) und/oder der Single-Photon-Emission-Computer-Tomographie (SPECT) und/oder der Magnetoenzephalographie und/oder der konventionellen Röntgentechnik und/oder der Ultraschalltechnik meßtechnisch erfaßt ist.

**Claims**

**1.** Method for quantifying and visualisation of 2- or 3-dimensional spatial differences for medical diagnostics, research and medical technology where, with the help of imaging processes, volume elements of at least one object are digitised and the relative positions of these volume elements are calculated, stored and displayed by a computer-assisted system for at least one reference structure and, if necessary, for all volume elements for this reference
*wherein*
the paths of the volume elements of the initial volume of the object moved to the corresponding volume element of the reference volume are calculated by a linear movement model

$$L(\delta \vec{u}^{(n)}) = f(\vec{u}^{(n)}_{ges})$$

$$\vec{u}^{(n+1)}_{ges} = \delta\vec{u}^{(n)} + \vec{u}^{(n)}_{ges}$$

where L is the differential operator $L = \mu\Delta + (\mu+\lambda)\triangledown\triangledown\cdot$, $\mu$, $\lambda$, is the Lam'e' constant, $\vec{f}$ is the external force based on the grey scale, $\delta\vec{u}^{(n)}$ is the $n^{th}$ local displacement in the model and $\vec{u}^{(n)}_{ges}$ is the total movement of any volume element already calculated, and by a numerical multigrid technique adapted to this movement model and, if necessary, with several resolution steps for the digitised volumes.

**2.** Method as in Claim 1
*wherein*
the path travelled by each volume element (deformation field) is recorded in a value-added memory.

**3.** Method as in Claims 1 and 2
*wherein*
the displacement of the volume element is carried out by the whole of or part of the initial volume using the deformation field.

**4.** Method as in one of Claims 1 to 2
*wherein*
an image of the deformation field is fed to a visualisation device (printing device or visual display unit) using a regular grid.

**5.** Method as in one of Claims 1 to 3
*wherein*
the displacement of the volume element from the whole of or parts of the initial volume is fed to a visualisation device (printing device or visual display unit)

**6.** Method as in one of Claims 1 to 5
*wherein*
the probability of structures of a population of objects appearing is calculated by using the deformation fields on the structures themselves, or the probabilities are calculated by using the deformation fields.

**7.** Method as in one of Claims 1 to 6
*wherein*
an elasticity model is used where the resulting deformation field is calculated once and not successively.

**8.** Method as in one of Claims 1 to 7
*wherein*

the forces are produced from a symmetrical grey-scale difference between the initial and reference volumes.

9. Method as in one of Claims 1 to 7 *wherein*
the size of the forces initially increase quadratically with the grey-scale difference and increases linearly with larger differences.

10. Method as in one of Claims 1 to 9 *wherein*
the multigrid method is applied as a Correction Scheme (CS) or as a Full Approximation Scheme to solve the linear movement model.

11. Method as in one of Claims 1 to 10 *wherein*
the transference (discretising) into an elasticity or movement model is carried out using finite differences or finite elements.

12. Method as in one of Claims 1 to 11 *wherein*
the solution is applied using the multigrid method and/or the method for coarsening the volumes on parallel computers while using several processors simultaneously.

13. Method as in one of Claims 1 to 12 *wherein*
deformation fields are caculated for different image yielding modalities of one or different objects.

14. Method as in one of Claims 1 to 13 *wherein*
at least one object is measured and recorded using Computer Tomography and/or Magnetic Resonance Tomography (MRT) and/or Positron Emission Tomography (PET) and/or Single Photon Emission Computer Tomography (SPECT) and/or Magneto Encephalography and/or conventional X-Ray techniques and/or Ultrasound techniques.

**Revendications**

1. Procédé destiné à quantifier et représenter des différences volumétriques bi- ou tridimensionnelles pour le diagnostic médical, la recherche et la technologie médicale, permettant de numériser des éléments volumétriques d'au moins un objet à l'aide de procédés producteurs d'images et de faire calculer les positions relatives de ces éléments volumétriques par rapport à une structure de référence et le cas échéant par rapport à tous les éléments volumétriques de cette référence par un système assisté par ordinateur, de les mémoriser et de les représenter

**se caractérisant par le fait que**
les trajets effectués par les éléments volumétriques du volume initial de l'objet sont calculés sur les éléments volumétriques correspondants du volume de référence par un modèle de mouvement linéarisé

$$L(\delta \vec{u}^{(n)}) = f(\vec{u}^{(n)}_{ges})$$

$$\vec{u}^{(n+1)}_{ges} = \delta \vec{u}^{(n)} + \vec{u}^{(n)}_{ges}$$

L étant l'opérateur différentiel $L = \mu\Delta + (\mu\lambda)\triangledown\triangledown\cdot$, $\mu$, $\lambda$ les constantes de Lam'e, $\vec{f}$ la force externe basée sur la valeur de gris, $\delta\vec{u}^{(n)}$ le nième décalage local dans le modèle et le mouvement global déjà calculé $\vec{u}^{(n+1)}_{ges}$ d'un élément volumétrique pris au hasard, et un procédé numérique à plusieurs réseaux, adapté à ce modèle de mouvement et le cas échéant avec plusieurs niveaux de résolution des volumes numérisés.

2. Procédé selon la revendication 1 se caractérisant par le fait que le trajet (champ de déformation) effectué par chaque élément volumétrique est saisi dans une mémoire de mesures.

3. Procédé selon les revendications 1 et 2, se caractérisant par le fait que le décalage des éléments volumétriques est effectué par l'ensemble du volume initial ou par des parties de ce volume à l'aide du champ de déformation.

4. Procédé selon l'une des revendications 1 à 2, se caractérisant par le fait qu'une visualisation du champ de déformation est ajoutée à l'aide d'un réseau régulier d'une unité de visualisation (milieu d'imprimante, écran).

5. Procédé selon l'une des revendications 1 à 3, se caractérisant par le fait que le décalage des éléments volumétriques est ajouté par l'ensemble ou des parties du volume initial d'une unité de visualisation (milieu d'imprimante, écran).

6. Procédé selon l'une des revendications 1 à 5, se caractérisant par le fait que la probabilité d'apparition de structures d'une population d'objets sera calculée par l'application des champs de déformation sur les structures mêmes ou que les probabilités seront calculées par l'emploi de champs de déformation.

7. Procédé selon l'une des revendications 1 à 6, se caractérisant par le fait qu'un modèle d'élasticité sera utilisé pour lequel le champ de déformation résultant sera calculé une fois et non successivement.

8. Procédé selon l'une des revendications 1 à 7, se caractérisant par le fait que les forces résultent d'une différence symétrisée de valeur de gris entre le volume initial et le volume de référence.

9. Procédé selon l'une des revendications 1 à 7, se caractérisant par le fait que l'intensité des forces croît tout d'abord de façon quadratique avec la différence de valeur de gris et augmente de façon linéaire pour les différences plus grandes.

10. Procédé selon l'une des revendications 1 à 9, se caractérisant par le fait que le procédé à plusieurs réseaux est conçu comme Correction Scheme (CS) ou comme Full Approximation Scheme, afin de résoudre le modèle de mouvement linéarisé.

11. Procédé selon l'une des revendications 1 à 10, se caractérisant par le fait que le transfert (discrétisation) dans un modèle d'élasticité ou de mouvement est effectué à l'aide de différences finies ou d'éléments finis.

12. Procédé selon l'une des revendications 1 à 11, se caractérisant par le fait que la solution avec le procédé à plusieurs réseaux et/ou le procédé pour rendre plus grossier les volumes est effectué sur des calculateurs parallèles pour un emploi simultané de plusieurs processeurs.

13. Procédé selon l'une des revendications 1 à 12, se caractérisant par le fait que le mouvement des champs de déformation se fait pour différentes modalités productrices d'image d'un ou de différents objets.

14. Procédé selon l'une des revendications 1 et 13, se caractérisant par le fait qu'au moins un objet est saisi au niveau mesure à l'aide de la scanographie et/ou de l'imagerie par résonance magnétique (I.R.M.) et/ou de l'I.R.M. fonctionnel et/ou de coupes histologiques en série et/ou de l'imagerie à émission de positrons (PET) et/ou de la scanographie single par émission de photon (SPECT) et/ou de la magnétoencéphalographie et/ou de la technique de radiologie conventionnelle et/ou de la technique des ultrasons.

Bewegung resultierend aus dem nicht-linearem Modell

wirkliche Bewegung

$\delta u_1$

$\delta u_2$

$\delta u_3$

$\delta u_4$

u

- Fig. 1 -

- Fig. 2 -

- Fig. 3 -

- Fig. 4 -

- Fig. 5 -

- Fig. 6 -

- Fig. 7 -